# EUROPEAN PATENT APPLICATION

(11) **EP 2 498 379 A1**
(43) Date of publication of application: **12.09.2012**
(21) Application number: 11157154.3
(22) Date of filing: 07.03.2011
(51) Int. Cl.: H02K 3/12, H02K 3/50, H02K 15/00

(54) **Method for reciprocally connecting conductor ends to define coils of an electric machine**

(71) Applicant: Alstom Technology Ltd, 5400 Baden (CH)
(72) Inventor: Nilsson, Hakan Johan Vilhelm, 72216, Vasteras (SE)

(57) **Abstract**

The method for reciprocally connecting conductor ends (10, 11) to define coils of an electric machine comprises: providing a connecting device (1) with elements (2, 3) that can be connected to the conductor ends (10, 11) and tightening elements (5), clamping the connecting device (1) to the conductor ends (10, 11), tightening the tightening elements (5), brazing or welding the connecting device (1) to the conductor ends (10, 11).

## Description

### TECHNICAL FIELD

The present invention relates to a method for reciprocally connecting conductor ends to define coils of an electric machine.

Such coils can be used as rotor and/or stator coils of electric machines.

In particular reference to stator coils of electric generators of medium voltage (typically up to 15000/18000 V) is made in the following.

### BACKGROUND OF THE INVENTION

Electric generators have a stator and a rotor, both having slots containing coils.

Each coil consists of two straight parts (housed within the slots) and two end windings (outside of the slots) that connect the straight parts together.

The coils are typically made by connecting (usually by brazing) two conductors together, each consisting of one straight part and two end winding portions.

US 7 400 072 discloses a clamp to connect the conductor ends together; this clamp has two connector bars with seats to accommodate ball parts of the conductor ends; in order to connect the connector bars together, removable bolts are provided instead of brazing, in order to reduce the connection time. Provision of bolds could be very troubling, because in case during operation they loosen, they generate vibrations that could damage the insulation.

CN 101 262 154 discloses to weld connector bars to conductor ends. With this system, it is difficult to keep the connector bars beside the conductor ends during welding or brazing.

### SUMMARY OF THE INVENTION

An aspect of the present invention therefore includes providing a method with which no risk of a troubling situation occurs (such as for example loosened bolts that generate vibrations and cause insulation deterioration).

The technical aim, together with these and further aspects, are attained according to the invention by providing a method and device in accordance with the accompanying claims.

### BRIEF DESCRIPTION OF THE DRAWINGS

Further characteristics and advantages of the invention will be more apparent from the description of a preferred but non-exclusive embodiment of the method, illustrated by way of non-limiting example in the accompanying drawings, in which:
Figures 1 through 6b show different steps of the method in embodiments of the invention;
Figure 7 shows a stator with slots and coil inserted therein; and
Figure 8 is a schematic view of conductor ends to be welded or brazed together to define a coil.

### DETAILED DESCRIPTION OF EMBODIMENTS OF THE INVENTION

In order to manufacture a coil, two substantially longitudinally C shaped conductors are manufactured and are then connected together at their ends to define the coil.

In the following, for easy of comprehension, the device for such a connection is described first.

The device 1 for reciprocally connecting conductor ends to define coils of an electric machine comprises a first and a second facing elements 2, 3; these elements 2, 3 can be plane plates, plates with a central protrusion 4 (like in the embodiment shown in the figures that has elements with a T cross section) defining two side housings, or combination thereof (i.e. one plate is a plane plate and the other has the central protrusion preferably extending up to the other plate and define a T cross section). Also an embodiment with plates being plane plates and a third element provided inbetween is possible (this third element replaces the protrusions shown in the figures). In these embodiments the central protrusions 4 or third elements improve the current flow. Naturally, the device can also have one single element (for example a bar shaped element).

The device 1 has tightening elements 5 that in different embodiments can be removable tightening elements or non-removable tightening elements. In both cases, the tightening elements can be bolts or screws that are removably or non-removably connected to the first and second elements 2, 3.

The material of the first and second elements 2, 3 (and when provided also of the third element 4 or single element) is preferably a magnetic material, since it allows heating (for welding or brazing) to be achieved inductively.

In case the tightening elements 5 are removable tightening elements, they can be made out of a non-magnetic material, to prevent connection to the first and/or second elements 2, 3 when heating (for welding or brazing) is achieved inductively. Naturally also magnetic materials are possible in case heating is achieved in a different way.

In case the tightening elements 5 are non-removably tightening elements, they are preferably made out of a magnetic material, such that they are connected to the first and/or second elements 2, 3 when heating (for welding or brazing) is achieved inductively. In addition, the tightening elements 5 can also be made out of a non-magnetic material, in case a subsequent connection is provided (for example a welding or brazing of the tightening elements to the first and/or second element 2, 3 is carried out after the welding or brazing of the first and/or second elements 2, 3 to the conductors to be connected together) or when heating is not achieved inductively.

In different embodiments, the tightening elements 5 can include clips, clamps, pins, etc.; also in this case they can be made out of a non-magnetic material or magnetic material.

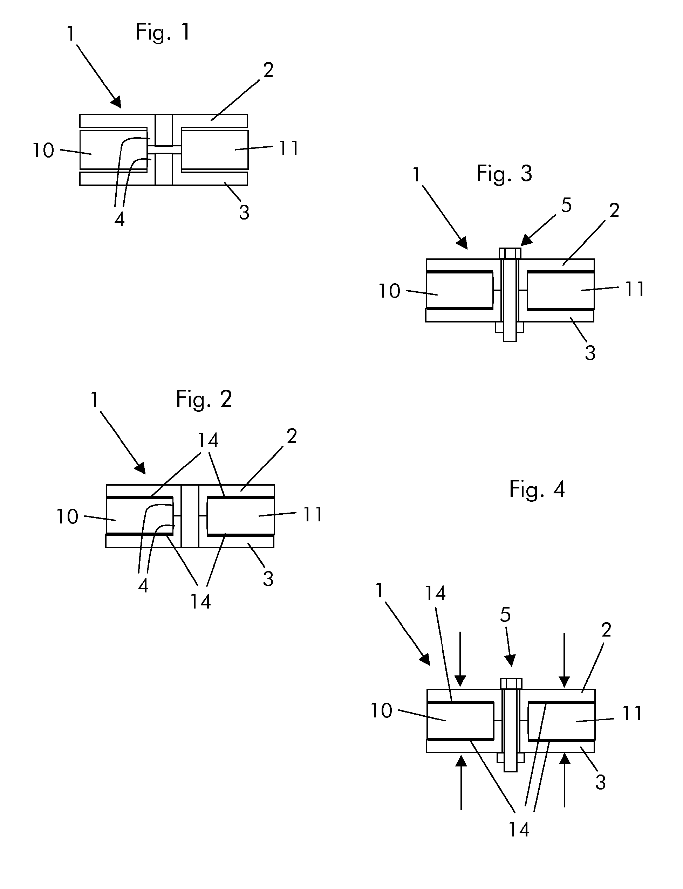

The method for reciprocally connecting conductor ends 10, 11 to define coils of an electric machine comprises:
- providing the connecting device 1 with the tightening elements 5 (figure 1);
- clamping the connecting device 1 to the conductor ends 10, 11 to be connected together (figure 2),
- tightening the tightening elements 5 (figure 3),
- brazing or welding the connecting device 1 to each conductor end 10, 11 (in figure 4 the arrows generally indicate the energy provided for welding or brazing); for example heating for welding or brazing is achieved by induction, anyhow any conventional way of heating the device 1 and conductor ends 10, 11 is possible.

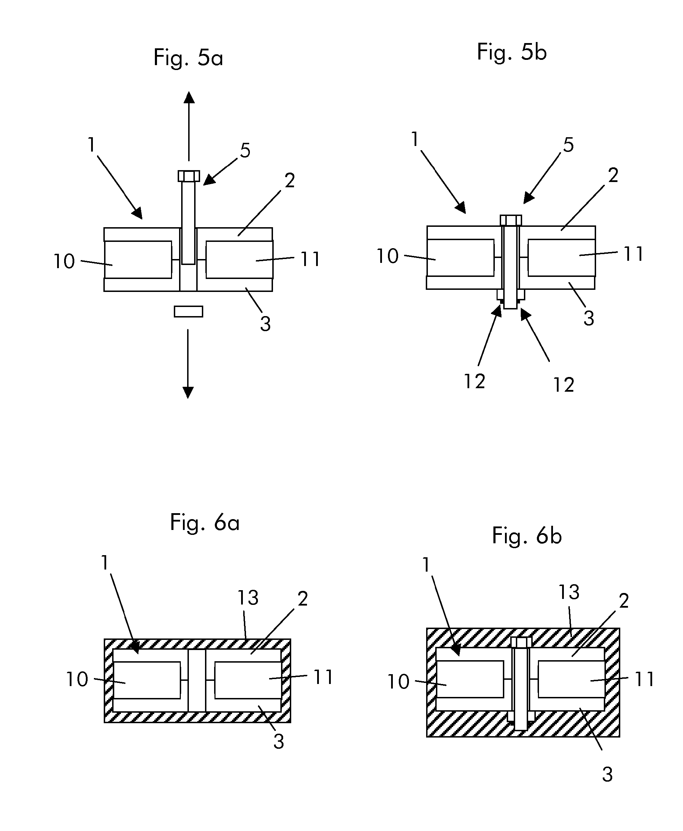

Then, in case the tightening elements 5 are of removable type, they can be removed (figure 5a).

Preferably, the space into which the tightening elements 5 were housed is then filled with a conductive material, to improve current flow.

Alternatively, in case the tightening elements 5 are of non-removable type (figure 5b):
- they are not removed, and/or
- if they are not connected to the first and/or second element 10, 11 during welding or brazing, or if they are only partially connected thereto or also for safety reasons, the tightening elements 5 can be connected to the first and/or second elements 10, 11 in a non-removable way 12 (for example by an additional or subsequent welding or brazing).

Removal or connection in a non-removable way prevent that when in operation the elements 5 loosen, causing vibrations and risk of damages in particular for the insulation of the coils.

Finally, the reciprocally connected device 1, and conductor ends 10, 11 are covered with an insulation 13; in different embodiments (according to the operating voltage of the electric machine provided with the coils) an insulating tape can be wrapped around the device 1 and conductor ends 10, 11 (figure 6a, 6b respectively show a device 1 without and with the tightening elements 5) to protect and electrically insulate it; in case the operating voltage is high, a cap fixed with a putty can be alternatively provided.

Preferably, the connection is achieved by brazing (instead of welding) and, for this reason, brazing material 14 is provided between the device 1 and the conductor ends 10, 11 before the tightening elements 5 are tightened; in this respect figure 1 shows the device 1 and conductor ends 10, 11 still without brazing material 14, figures 2 through 4 shows the brazing material 14 and figures 5a, 5b and 6a, 6b do not show the brazing material anymore, since it was melted during brazing to join the device 1 and conductor ends 10, 11.

In addition, the brazing material 14 is only shown at the bases of the elements 2 and 3 (i.e. no brazing material 14 is shown at the protrusions 4), it is anyhow clear that brazing material 14 can also be provided at the protrusions 4.

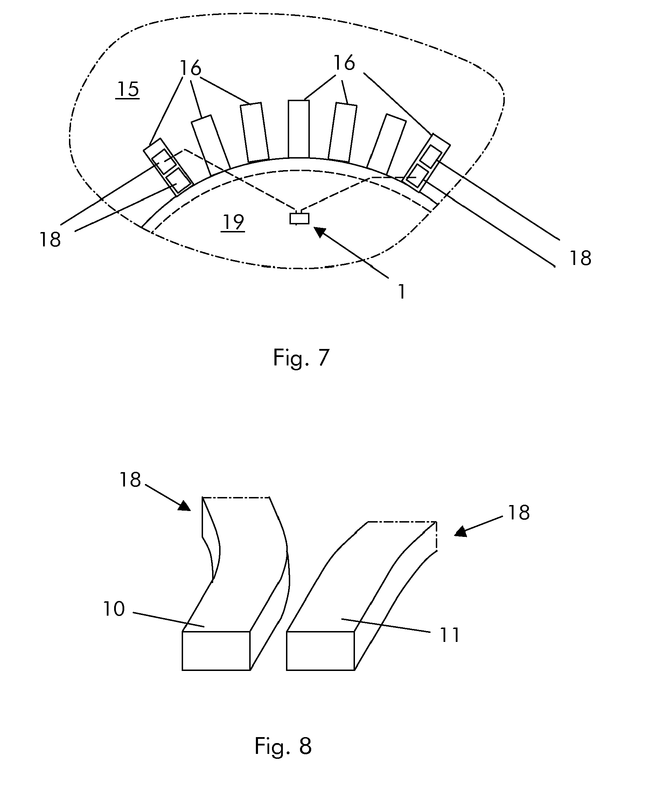

The coils manufactured according to the method can be stator coils and/or rotor coils (in particular figure 7 shows an annular stator 15 with slots 16 and conductors 18 of stator coils; reference 19 indicates the rotor 19 housed within a stator bore).

As known both stator and rotor are provided with slots into which the coils are housed. Typically each slot houses more than one conductor (such as for example shown in figure 7); in particular each slot 16 has two conductors 18 housed one above the other.

The device and the method are preferably used to manufacture coils of medium or large power electric machines such as voltage generators.

For example, in case two conductors 18 are provided within each slot 16 one above the other, each coil has one conductor 18 housed at the top of a slot 16 and the other conductor 18 housed at the bottom of another slot 16.

Naturally the features described may be independently provided from one another.

In practice the materials used and the dimensions can be chosen according to requirements and to the state of the art.

### REFERENCE NUMBERS

- 1: device
- 2: first element
- 3: second element
- 4: protrusion
- 5: tightening element
- 10, 11: conductor ends
- 12: non-removable connection
- 13: insulation
- 14: brazing material
- 15: stator
- 16: slots
- 18: conductor
- 19: rotor

## Claims

1. Method for reciprocally connecting conductor ends (10, 11) to form coils of an electric machine comprising:
- providing a connecting device (1) having at least an element (2, 3) that can be connected to the conductor ends (10, 11), and tightening elements (5);
- clamping the connecting device (1) to the conductor ends (10, 11) to be connected together,
- tightening the tightening elements (5), **characterised by** brazing or welding the connecting device (1) to each conductor end (10, 11).

2. Method according to claim 1, **characterised by** removing the tightening elements (5) after brazing or welding.

3. Method according to claim 2, **characterised in that**, after the tightening elements are removed, the space into which the tightening elements (5) were housed is filled with a conductive material.

4. Method according to claim 1, **characterised by** connecting the tightening elements (5) in a non-removable way during or after the brazing or welding.

5. Method according to claim 1, **characterised by** covering the reciprocally connected device (1) and conductor ends (10, 11) with an insulation (13).

6. Method according to claim 1, **characterised by** providing a brazing material (14) between the connecting device (1) and the conductor ends (10, 11) before the tightening elements (5) are tightened.

7. Method according to claim 1, **characterised in that** the tightening elements (5) are made out of a non-magnetic material.

8. Method according to claim 1, **characterised in that** the tightening elements (5) are made out of a magnetic material.

9. Method according to claim 1, **characterised in that** the tightening elements (5) comprise bolts or screws.

10. Method according to claim 1, **characterised in that** the at least an element (2, 3) is made out of a magnetic material.
